# FASCICULE DE BREVET EUROPEEN

(11) **EP 2 338 727 B1**
(45) Date de publication et mention de la délivrance du brevet: **21.11.2012**
(21) Numéro de dépôt: 10306380.6
(22) Date de dépôt: 09.12.2010
(51) Int. Cl.: B60P 1/36

(54) **Caisse de transport d'objets munie d'un dispositif de convoyage**
Fahrzeug mit eingebauten Förderband
Truck with a buil in conveyor belt

(30) Priorité: 24.12.2009 FR 0959603
(43) Date de publication de la demande: 29.06.2011
(73) Titulaire: Grosse, Gérard, 76270 Neufchatel-en-Bray (FR)
(72) Inventeur: Grosse, Gérard, 76270 Neufchatel-en-Bray (FR)
(74) Mandataire: Domenego, Bertrand

(56) Documents cités:
- EP-A1- 0 300 700
- EP-A1- 0 611 676
- EP-A1- 1 127 813
- EP-A1- 1 946 963
- DE-A1- 19 732 788
- US-A- 4 405 089

## Description

La présente invention concerne une caisse de véhicule de transport d'objets délimitant un espace intérieur de transport et comportant un dispositif de convoyage comprenant un premier convoyeur disposé dans l'espace de transport et un dispositif d'entraînement.

Les services postaux, les services de messagerie ou les entreprises de vente par correspondance sont amenés à acheminer dans un même véhicule de transport, tel qu'un camion, un grand nombre d'objets de formes et de dimensions différentes.

Pour le déchargement d'objets transportés en vrac à l'intérieur de la caisse d'un véhicule tel qu'une semi-remorque, il est possible d'installer à demeure un convoyeur à bande sur le plancher de la caisse du véhicule. Ce convoyeur permet, au moment du déchargement, de transporter les objets en vrac qu'il supporte vers l'extrémité arrière ouverte de la caisse et de les décharger sur un quai de déchargement. Dans les dispositifs utilisés actuellement, la bande du convoyeur s'étend sensiblement sur toute la surface du plancher de la caisse. Elle est entraînée en translation par un dispositif d'entraînement, comprenant quatre roues dentées et des chaînes. Ce dispositif d'entraînement est placé à l'une des extrémités latérales de la bande, dans l'une des parois latérales de la caisse occasionnant un trou important dans ladite paroi latérale. Du fait de l'encombrement latéral du dispositif d'entraînement, le châssis du véhicule utilisé présente des dimensions non standard. Ainsi, il est notamment plus étroit qu'un châssis classique de semi-remorque.

EP 0 300 700 décrit une caisse de véhicule de transport dans laquelle est installé un convoyeur.

De même, le système de tension actuel de la bande transporteuse (vérins à gaz) nécessite la présence de deux trappes de visite à l'avant, donc de deux trous de dimensions importantes dans les parois latérales de la caisse, pour le réglage et l'entretien dudit système de tension. A l'issue de la durée de vie du véhicule, il serait avantageux économiquement de pouvoir démonter le convoyeur à bande de la caisse de manière à revendre le véhicule pour d'autres utilisations dans de bonnes conditions. Cependant, une telle revente s'avère difficile du fait des dimensions non standard du châssis du véhicule et de la présence de trous importants dans les parois latérales.

Un but de la présente invention est donc de proposer une caisse de véhicule de transport d'objets de dimensions standard comportant un dispositif de convoyage des objets et susceptible d'être revendue facilement en fin de vie.

A cet effet, l'invention a pour objet une caisse du type précité dans laquelle le dispositif de convoyage comprend un deuxième convoyeur adjacent au premier convoyeur, les premier et deuxième convoyeurs comportant chacun une bande de convoyage et un rouleau d'entraînement apte à être entraîné en rotation par l'intermédiaire du dispositif d'entraînement, lequel dispositif d'entraînement est accouplé au rouleau d'entraînement entre les premier et deuxième convoyeurs.

Suivant des modes particuliers de réalisation, la caisse de véhicule de transport d'objets comporte l'une ou plusieurs des caractéristiques suivantes, prise(s) isolément ou en combinaison :
- le rouleau d'entraînement et le dispositif d'entraînement sont communs aux premier et deuxième convoyeurs ;
- la caisse comprend en outre un dispositif de commande et le dispositif de commande et le dispositif d'entraînement sont aptes à faire fonctionner séparément ou simultanément les rouleaux d'entraînement de chaque convoyeur ;
- la caisse comprend une paroi inférieure et un moto-réducteur et le dispositif d'entraînement comprend un organe menant en sortie du moto-réducteur, un organe mené et une courroie reliant l'organe menant à l'organe mené, l'organe menant et le moto-réducteur étant agencés sous la paroi inférieure de la caisse ;
- la caisse comprend un passage de sortie et dans laquelle l'organe menant et l'organe mené sont espacés l'un de l'autre selon la direction longitudinale, l'organe menant étant agencé à une distance plus grande du passage de sortie que l'organe mené ;
- le moto-réducteur et l'organe menant sont logés dans un coffre placé sous la paroi inférieure de la caisse de manière à être protégés des projections ;
- chaque bande de convoyage est refermée en boucle entre le rouleau d'entraînement et un rouleau de renvoi libre en rotation, la bande formant un brin de transport des objets et un brin de retour à vide, le brin de transport étant tendu entre le rouleau de renvoi et le rouleau d'entraînement et le brin de retour à vide étant en appui sur des rouleaux intermédiaires disposés entre le rouleau de renvoi et le rouleau d'entraînement, le brin de retour à vide formant sous l'action de son propre poids une chaînette de profondeur variable entre deux rouleaux intermédiaires de manière à compenser la dilatation de la bande,
- la caisse comporte en outre un plan incliné agencé de manière inclinée vers le bas et vers l'arrière par rapport au plan des bandes de convoyage du premier et du deuxième convoyeur et prolongeant les bandes de convoyage de la caisse de manière à permettre le déchargement des objets ; et
- le plan incliné est pourvu de moyens de roulement, tels que des billes, des rouleaux ou des roulements à billes propres à faciliter le glissement des objets sur le plan incliné.

L'invention a également pour objet un véhicule de transport routier muni d'une caisse tel que définie ci-dessus.

L'invention sera mieux comprise à l'aide de la description qui va suivre, donnée uniquement à titre d'exemple et faite en se référant aux dessins, sur lesquels :
- la figure 1 est une représentation schématique d'une installation de chargement/déchargement d'objets ;
- la figure 2 est une vue en perspective de l'espace intérieur d'une caisse selon l'invention ;
- la figure 3 est une vue en perspective éclatée d'une partie de l'espace intérieur de la caisse selon l'invention ;
- la figure 4 est une coupe de la figure 3 selon le plan IV-IV; et
- la figure 5 est une section longitudinale d'un dispositif de convoyage selon une variante.

Dans la suite, les termes « avant » et « arrière » sont utilisés en référence au sens d'avancement du véhicule.

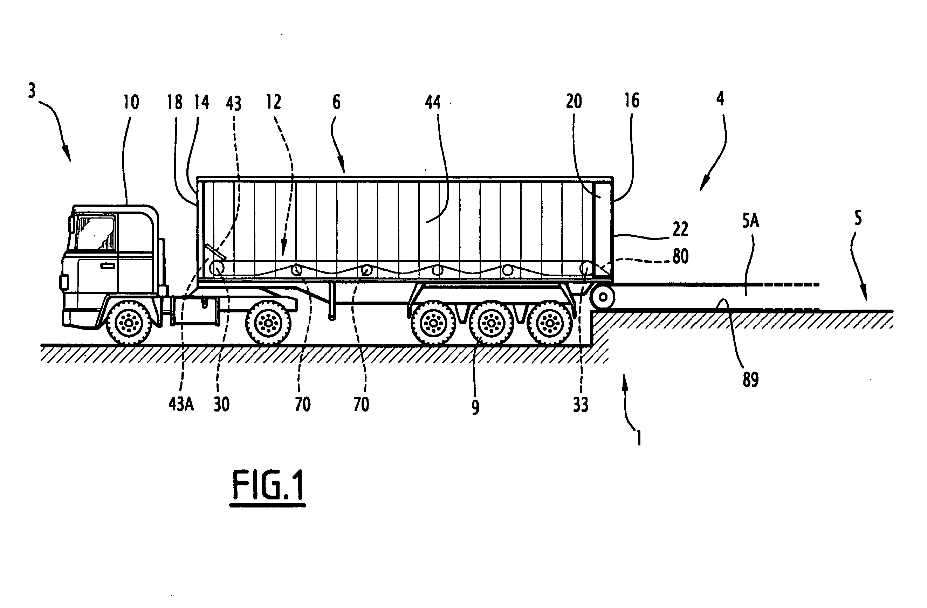

L'installation 1 représentée sur la figure 1 est une installation de chargement ou de déchargement d'objets transportés ou destinés à être transportés, tels que des colis.

Elle comporte un ou plusieurs véhicules 3 de transport d'objets et des stations de chargement/déchargement 4 des véhicules 3 stationnés aux points de chargement ou de déchargement des véhicules. Ces stations 4 sont installées par exemple dans des entrepôts ou des centres de tri répartis sur tout le territoire. Les stations de chargement/déchargement 4 comportent notamment un quai 5 de chargement/ déchargement équipé ou non d'un convoyeur 5A.

Le véhicule 3 représenté sur la figure 1 est destiné notamment au transport en vrac de colis postaux ou de VPC. Le véhicule 3 comporte une caisse 6 supportée à l'arrière par des essieux 9 et à l'avant par un tracteur 10.

La caisse 6 est avantageusement de forme sensiblement parallélépipédique et délimite un espace intérieur, dans lequel est agencé un dispositif de convoyage 12, apte à transporter des objets entre une extrémité avant 14 de la caisse 6 et une extrémité arrière 16 de la caisse 6. L'extrémité avant 14 est fermée par une paroi avant 18, tandis que l'extrémité arrière 16 comporte une porte articulée 20 obturant un passage de sortie 22 des objets contenus dans la caisse 6.

La caisse 6 a de préférence des dimensions standard, c'est-à-dire une hauteur intérieure d'environ 2,7 m, une largeur extérieure d'environ 2,55 m et une longueur d'environ 13,5 m.

Le dispositif de convoyage 12, représenté sur les figures 1 à 3, est agencé sur une paroi inférieure 23 de la caisse 6. Il comporte un premier convoyeur 24A et un deuxième convoyeur 24B adjacents. Les convoyeurs 24A, 24B comprennent respectivement une bande de convoyage 27A, 27B. Dans le mode de réalisation envisagé, les convoyeurs 24A, 24B sont entraînés par l'intermédiaire d'un même dispositif d'entraînement 28, dont l'extrémité d'entraînement est agencée entre les bandes de convoyage 27A et 27B.

Ces bandes de convoyage 27A, 27B s'étendent longitudinalement entre la paroi avant 18 et l'extrémité arrière 16 de la caisse 6. Comme cela est représenté sur les figures 1, 3 et 4, elles sont repliées en boucle entre un rouleau de renvoi 30 et un rouleau d'entraînement 33 et forment ainsi un brin de transport 36A, 36B, apte à transporter les objets et un brin de retour à vide 37A, 37B, agencé au-dessous du brin de transport 36A, 36B au-dessus de la paroi inférieure 23. Les brins 36A, 36B et 37A, 37B sont sensiblement parallèles entre eux. Les bandes de convoyage 27A, 27B sont agencées sensiblement dans le même plan et présentent avantageusement des caractéristiques et des dimensions identiques. Le rouleau de renvoi 30 est agencé en retrait de la paroi avant 18 de la caisse 6. En outre, le rouleau d'entraînement 33 est agencé en retrait du passage de sortie 22.

Un plan de support 38 rigide s'étendant dans un plan sensiblement parallèle au brin de transport 36A, 36B est agencé entre le rouleau d'entraînement 33 et le rouleau de renvoi 30. Le brin de transport 36A, 36B prend appui sur le plan de support 38 rigide.

De préférence, les bandes de convoyage 27A, 27B recouvrent la majeure partie de la surface du plan de support 38 et donc de la paroi inférieure 23. Il existe cependant un espace 39 entre les bords latéraux en regard 40A, 40B des bandes 27A, 27B, dans lequel s'étend le plan de support 38.

Avantageusement, les bandes de convoyage 27A, 27B sont prolongées à l'arrière par un plan incliné arrière 80.

Un plan incliné avant 43 est agencé à l'avant contre la paroi avant 18 de manière à éviter que des objets ne tombent ou ne se coincent dans un espace 43A entre la paroi avant 18 et le rouleau de renvoi 30.

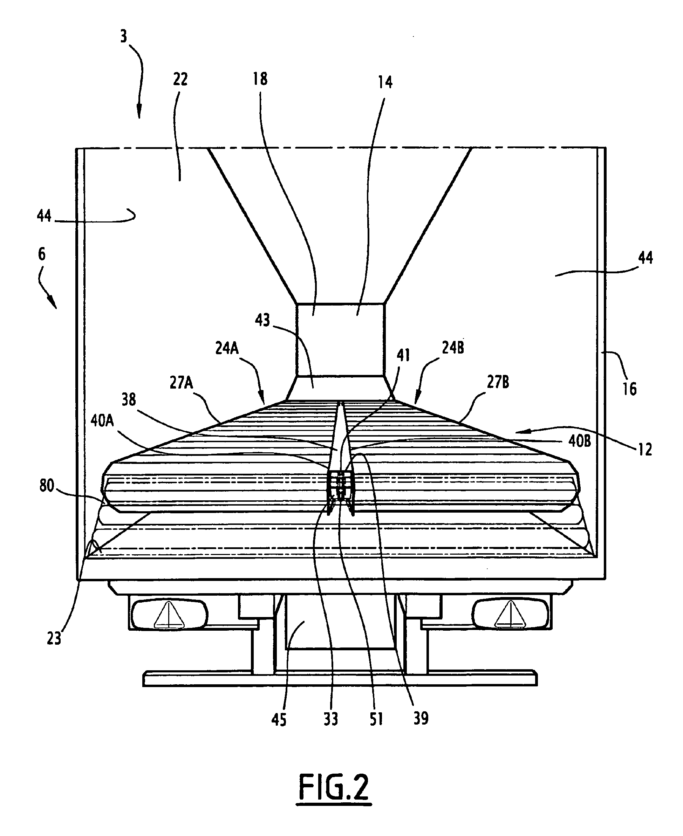

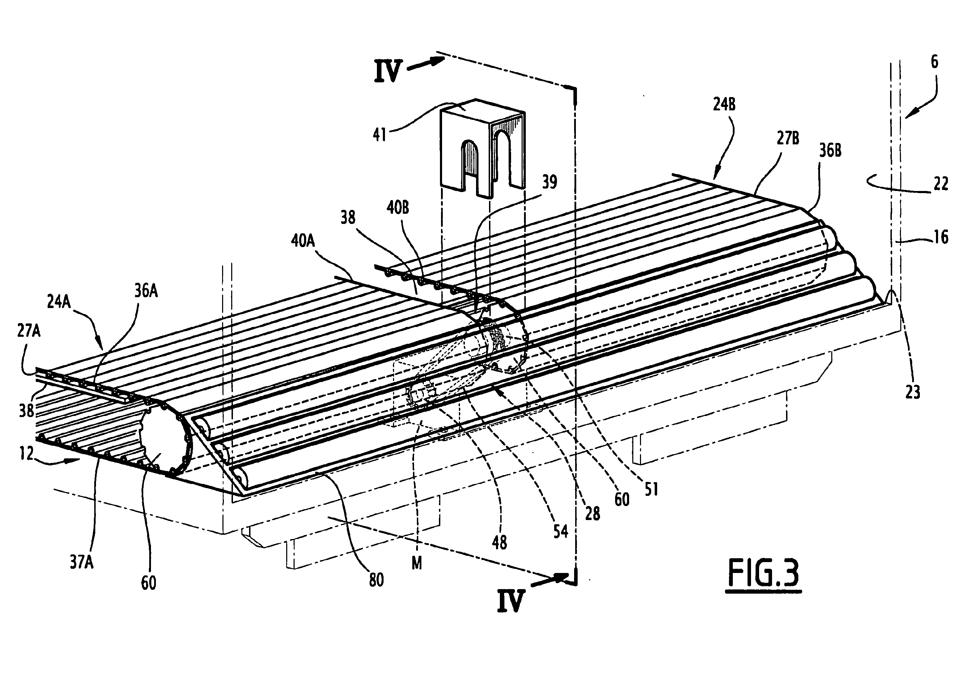

Avantageusement, un insert 41 en forme de U ouvert en direction de la paroi inférieure 23 est inséré dans l'espace 39 à la suite du plan de support 38 au-dessus du rouleau d'entraînement 33, comme cela est représenté sur les figures 2 et 3. L'insert 41 est apte à remplir l'espace 39 entre les bords latéraux 40A, 40B de manière à éviter que des objets ne tombent ou ne se coincent dans l'espace 39 au niveau du rouleau d'entraînement 33. L'insert 41 s'étend longitudinalement sensiblement entre l'extrémité arrière du plan de support 38 et une extrémité avant 83 du plan incliné 80 et verticalement sensiblement entre le plan de support 38 et la paroi inférieure 23, de laquelle il est solidaire.

Le rouleau de renvoi 30 est monté sur la caisse 6 de manière libre en rotation par rapport à la caisse 6. Le rouleau d'entraînement 33 est apte à être entraîné en rotation par le dispositif d'entraînement 28. Une partie de ce dispositif d'entraînement 28 est logée dans un coffre 45, agencé à l'extrémité arrière 16, sous la paroi inférieure 23 de la caisse 6. Le dispositif d'entraînement 28 fait saillie dans l'espace 39 entre les bandes 27A, 27B à travers une fente ménagée dans la paroi inférieure 23 de la caisse 6.

Les rouleaux 30 et 33 s'étendent transversalement entre des parois latérales 44 de la caisse 6. Ils sont sensiblement parallèles entre eux et sont espacés selon la direction longitudinale, le rouleau de renvoi 30 étant agencé à l'extrémité avant 14 de la caisse 6 et le rouleau d'entraînement 33 étant agencé à l'extrémité arrière 16. Les rouleaux d'entraînement 33 et de renvoi 30 sont de préférence communs aux deux bandes 27A, 27B. L'insert 41 présente avantageusement au niveau du rouleau d'entraînement 33 des orifices aptes à laisser passer ledit rouleau d'entraînement 33.

En variante, chaque convoyeur 24A, 24B possède son propre dispositif d'entraînement, son propre rouleau de renvoi, et son propre rouleau d'entraînement. En particulier, dans cette variante, chaque convoyeur 24A, 24B est associé à un dispositif de commande propre (non représenté) permettant une mise en marche séparée ou simultanée des deux convoyeurs 24A, 24B.

Le dispositif d'entraînement 28 est accouplé au rouleau d'entraînement 33 entre le premier convoyeur 24A et le deuxième convoyeur 24B.

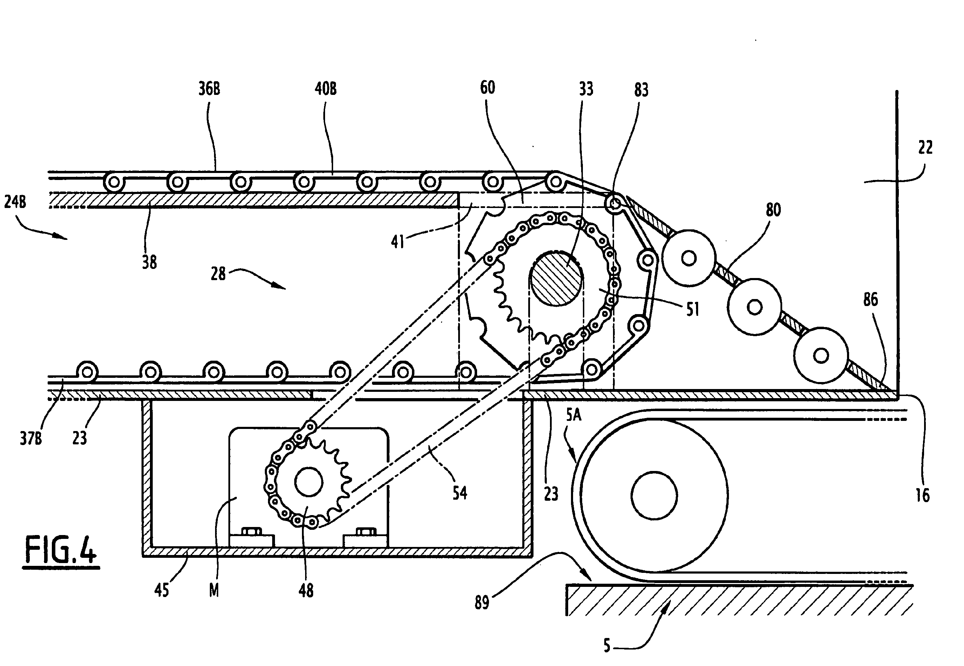

Comme cela est représenté sur la figure 4, le dispositif d'entraînement 28 comporte un organe menant, sous la forme d'un pignon 48, et un organe mené, sous la forme d'une roue dentée 51, reliés par une courroie 54, par exemple par une chaîne. Le pignon 48 est lié en rotation à l'axe d'un motoréducteur M. La roue dentée 51 est agencée coaxialement au rouleau d'entraînement 33 de manière solidaire en rotation du rouleau d'entraînement 33 entre le premier convoyeur 24A et le deuxième convoyeur 24B. Elle est apte à être entraînée en rotation par le pignon 48 par l'intermédiaire de la chaîne 54.

Le pignon 48 comporte un nombre de dents inférieur ou égal à celui de la roue dentée 51.

De préférence, comme cela est représenté sur la figure 4, l'organe menant, c'est-à-dire le pignon 48 est agencé sous la paroi inférieure 23 de la caisse 6 en étant décalé vers l'avant de la roue dentée 51. Ainsi, le pignon 48 et le moto-réducteur M sont espacés longitudinalement de la roue dentée 51 et disposés à une distance longitudinale moins importante de l'extrémité avant 14 de la caisse 6 que la roue dentée 51, libérant sous la caisse 6 un espace libre de réception du quai 5 comme illustré sur les Figures 1 et 4.

Avantageusement, la caisse 6 ne comporte pas de dispositif d'alimentation électrique, le moto-réducteur M étant apte à être alimenté en courant électrique par l'intermédiaire d'une prise de quai, disposée sur le quai 5 de chargement/déchargement.

Selon une variante, le coffre 45 comporte un dispositif embarqué d'alimentation en courant électrique du moto-réducteur M.

Les bandes 27A, 27B sont des bandes modulaires formées par assemblage d'éléments en forme de « dominos » ou de plaquettes suivant un procédé connu de manière à former respectivement une bande 27A, 27B de la longueur souhaitée.

Le rouleau de renvoi 30 et le rouleau d'entraînement 33 comprennent chacun au moins deux pignons 60 d'entraînement pour chaque bande 27A, 27B. Les pignons 60 sont agencés sur les rouleaux d'entraînement 33 et de renvoi 30 de manière espacée transversalement et sont solidaires en rotation de ces derniers. Les pignons 60 sont aptes à s'engrener avec l'assemblage d'éléments en forme de « dominos » ou de plaquettes de manière à entraîner respectivement la bande 27A ou 27B.

Les bandes 27A, 27B sont réalisées en matière plastique, notamment en polypropylène.

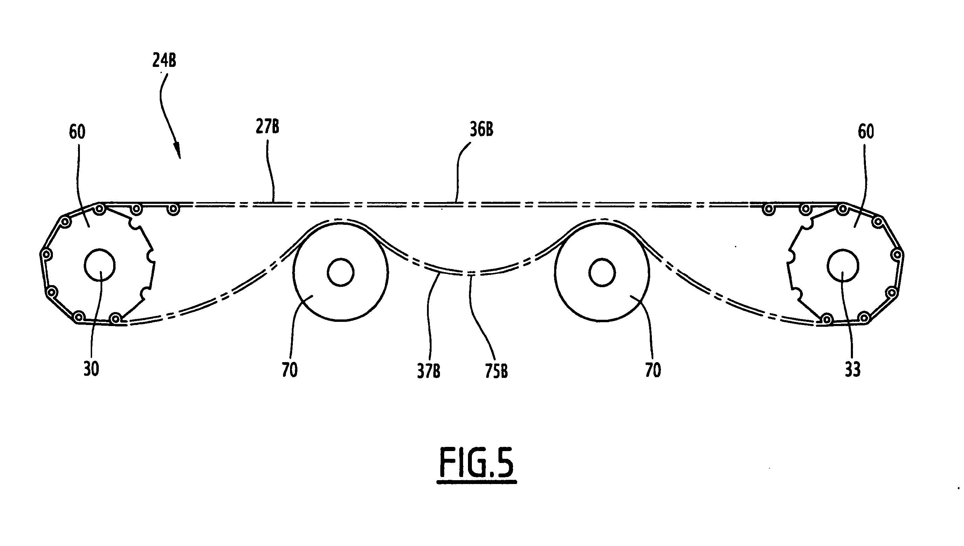

Selon une variante représentée sur la figure 5, des rouleaux intermédiaires 70 de support du brin de retour à vide 37A, 37B sont intercalés entre le rouleau de renvoi 30 et le rouleau d'entraînement 33. Ils sont fixés aux parois latérales 44 de la caisse 6 par des moyens de fixation adaptés et sont libres en rotation. Les rouleaux intermédiaires 70 sont sensiblement parallèles aux rouleaux d'entraînement 33 et de renvoi 30, mais présentent un diamètre inférieur. Le brin de retour à vide 37A, 37B est disposé en appui sur les rouleaux intermédiaires 70 et forme, sous l'action de son propre poids, une chaînette 75A, 75B entre deux rouleaux intermédiaires 70 consécutifs.

Ainsi, la profondeur de la chaînette 75A, 75B est apte à varier en fonction de l'état de dilatation du matériau constituant les bandes 27A, 27B évitant ainsi la présence d'un système de tension, par exemple de vérins à gaz, pour compenser les dilatations.

Le plan incliné 80 est placé dans le prolongement du dispositif de convoyage 12. Le plan incliné 80 est par exemple de forme sensiblement parallélépipédique et l'une de ses dimensions est sensiblement égale à la distance entre les parois latérales 44 de la caisse 6. Il comporte une extrémité avant 83 et une extrémité arrière 86. L'extrémité avant 83 est apte à prolonger les brins de transport 36A, 36B des bandes 27A, 27B des convoyeurs 24A, 24B. Le plan incliné 80 est agencé de manière inclinée vers l'arrière et vers le bas par rapport au plan des brins de transport 36A, 36B des convoyeurs 24A, 24B. Il s'étend entre l'extrémité arrière des brins de transport 36A, 36B des bandes 27A, 27B et le passage de sortie 22 de la caisse 6. L'extrémité arrière 86 prend avantageusement appui sur la paroi inférieure 23 de la caisse 6 au niveau du passage de sortie 22. Le plan incliné 80 est muni éventuellement de moyens de roulement aptes à faciliter le déchargement des objets. Il s'agit par exemple d'une tôle à billes ou d'une tôle pourvue de rouleaux libres en rotation ou de roulements à billes.

De manière avantageuse, un élément de jonction souple, par exemple en caoutchouc ou sous la forme d'un balai (non représenté) est interposé entre l'extrémité avant 83 du plan incliné 80 et les bandes 27A, 27B pour conférer une étanchéité optimale au système.

Ainsi, le plan incliné 80 et les moyens de roulement éventuels qu'il comporte facilitent le glissement des objets, par exemple vers le convoyeur 5A disposé sur le quai 5.

Selon d'autres modes de réalisation de la présente invention, le dispositif de convoyage 12 comprend plus de deux convoyeurs adjacents, par exemple trois convoyeurs adjacents. Dans ce cas, un dispositif d'entraînement 28 est accouplé aux rouleaux d'entraînement entre chaque paire de convoyeurs adjacents.

Lorsque le véhicule 3 arrive à son point de déchargement, il stationne de telle sorte qu'une partie de l'arrière de la caisse 6 chevauche une surface supérieure 89 du quai 5 correspondant. La porte arrière 20 est ensuite ouverte, puis un opérateur branche le moto-réducteur M à la prise de quai de manière à alimenter le moto-réducteur M en courant électrique, puis met en route les convoyeurs 24A, 24B dans le sens du déchargement. Les brins de transport 36A, 36B, qui portent les objets transportés par le véhicule 3, déplacent alors ces objets vers l'extrémité arrière 16 de la caisse 6 et vers le plan incliné 80. Les objets glissent ensuite le long du plan incliné 80 et arrivent par exemple sur le convoyeur 5A agencé sur le quai 5.

La présente invention présente l'avantage de permettre l'utilisation de châssis standard de semi-remorque, puisque le dispositif d'entraînement des convoyeurs est disposé entre les deux convoyeurs et non plus sur le côté de la caisse. L'utilisation du système de rouleaux intermédiaires au lieu d'un système de vérins à gaz contribue également à la standardisation du châssis, puisqu'elle évite de munir la caisse d'orifices d'accès aux vérins à gaz.

L'agencement en oblique de l'organe menant et de l'organe mené associé au plan incliné arrière diminue l'encombrement du dispositif d'entraînement.

De plus, le dispositif selon l'invention ne nécessite pas de renvoi au sein du dispositif d'entraînement pour des couples normaux, ce qui diminue l'encombrement du dispositif d'entraînement. L'absence d'un renvoi diminue également le coût de fabrication de la caisse.

## Revendications

1. Caisse (6) de véhicule de transport d'objets délimitant un espace intérieur de transport et comportant un dispositif de convoyage (12) comprenant un premier convoyeur (24A) disposé dans l'espace de transport et un dispositif d'entraînement (28), le dispositif de convoyage (12) comprenant un deuxième convoyeur (24B) adjacent au premier convoyeur (24A), les premier et deuxième convoyeurs (24A, 24B) comportant chacun une bande de convoyage (27A, 27B) et un rouleau d'entraînement (33) apte à être entraîné en rotation par l'intermédiaire du dispositif d'entraînement (28), lequel dispositif d'entraînement (28) est accouplé au rouleau d'entraînement (33) entre les premier et deuxième convoyeurs (24A, 24B),
**caractérisée en ce qu'**elle comprend une paroi inférieure (23) et un moto-réducteur (M), le dispositif d'entraînement (28) comprenant un organe menant (48) en sortie du moto-réducteur (M), un organe mené (51) et une courroie (54) reliant l'organe menant (48) à l'organe mené (51), l'organe menant (48) et le moto-réducteur (M) étant agencés sous la paroi inférieure (23) de la caisse (6).

2. Caisse (6) selon la revendication 1, dans laquelle le rouleau d'entraînement (33) et le dispositif d'entraînement (28) sont communs aux premier et deuxième convoyeurs (24A, 24B).

3. Caisse (6) selon la revendication 1, laquelle comprend un dispositif de commande et dans laquelle le dispositif de commande et le dispositif d'entraînement (28) sont aptes à faire fonctionner séparément ou simultanément les rouleaux d'entraînement (33) de chaque convoyeur (24A, 24B).

4. Caisse (6) selon l'une quelconque des revendications précédentes, laquelle comprend un passage de sortie (22) et dans laquelle l'organe menant (48) et l'organe mené (51) sont espacés l'un de l'autre selon la direction longitudinale, l'organe menant (48) étant agencé à une distance plus grande du passage de sortie (22) que l'organe mené (51).

5. Caisse (6) selon l'une quelconque des revendications précédentes, dans laquelle le moto-réducteur (M) et l'organe menant (48) sont logés dans un coffre (45) placé sous la paroi inférieure (23) de la caisse (6) de manière à être protégés des projections.

6. Caisse (6) selon l'une quelconque des revendications précédentes, dans laquelle chaque bande de convoyage (27A, 27B) est refermée en boucle entre le rouleau d'entraînement (33) et un rouleau de renvoi (30) libre en rotation, la bande (27A, 27B) formant un brin de transport des objets (36A, 36B) et un brin de retour à vide (37A, 37B), le brin de transport étant tendu entre le rouleau de renvoi (30) et le rouleau d'entraînement (33) et le brin de retour à vide (37A, 37B) étant en appui sur des rouleaux intermédiaires (70) disposés entre le rouleau de renvoi (30) et le rouleau d'entraînement (33), le brin de retour à vide (37A, 37B) formant sous l'action de son propre poids une chaînette (75A, 75B) de profondeur variable entre deux rouleaux (70) intermédiaires de manière à compenser la dilatation de la bande (27A, 27B).

7. Caisse (6) selon l'une quelconque des revendications précédentes, laquelle comporte en outre un plan incliné (80) agencé de manière inclinée vers le bas et vers l'arrière par rapport au plan des bandes de convoyage (27A, 27B) du premier et du deuxième convoyeur (24A, 24B) et prolongeant les bandes de convoyage (27A, 27B) de la caisse (6) de manière à permettre le déchargement des objets.

8. Caisse (6) selon la revendication 7, dans laquelle le plan incliné (80) est pourvu de moyens de roulement, tels que des billes, des rouleaux ou des roulements à billes propres à faciliter le glissement des objets sur le plan incliné (80).

9. Caisse (6) selon l'une quelconque des revendications précédentes, dans laquelle l'organe mené (51) est agencé coaxialement au rouleau d'entraînement (33) de manière solidaire en rotation du rouleau d'entraînement (33) entre le premier convoyeur (24A) et le deuxième convoyeur (24B).

10. Caisse (6) selon l'une quelconque des revendications précédentes, dans laquelle l'organe menant (48) en sortie du motoréducteur (M) est relié en prise directe par l'intermédiaire de la courroie (54) à l'organe mené (51).

11. Caisse (6) selon l'une quelconque des revendications précédentes, dans laquelle le dispositif d'entraînement (28) fait saillie dans un espace (39) entre les bandes de convoyage (27A, 27B) à travers une fente ménagée dans la paroi inférieure (23) de la caisse (6).

12. Caisse (6) selon la revendication 11, dans laquelle la courroie (54) se déploie à travers la fente.

## Claims

1. Body (6) of a vehicle for transporting articles, said body delimiting an internal transporting space and comprising a conveying device (12) comprising a first conveyor (24A) disposed in the transporting space and a driving device (28), said conveying device (12) comprising a second conveyor (24B) adjacent to the first conveyor (24A), the first and second conveyors (24A, 24B) each comprising a conveyor belt (27A, 27B) and a driving roller (33) which is capable of being driven in rotation via the driving device (28), which driving device (28) is coupled to the driving roller (33) between the first and second conveyors (24A, 24B),
**characterised in that** said body comprises a lower wall (23) and a gear motor (M), the driving device (28) comprising a driving component (48) on the output side of the gear motor (M), a driven component (51) and a belt (54) connecting the driving component (48) to the driven component (51), the driving component (48) and the gear motor (M) being arranged under the lower wall (23) of the body (6).

2. Body (6) according to claim 1, in which the driving roller (33) and the driving device (28) are common to the first and second conveyors (24A, 24B).

3. Body (6) according to claim 1, which comprises a control device and in which said control device and the driving device (28) are capable of causing the driving rollers (33) of each conveyor (24A, 24B) to operate separately or simultaneously.

4. Body (6) according to any of the preceding claims, which comprises an outlet passage (22) and in which the driving component (48) and the driven component (51) are spaced apart from one another in the longitudinal direction, said driving component (48) being arranged at a greater distance from the outlet passage (22) than the driven component (51).

5. Body (6) according to any of the preceding claims, in which the gear motor (M) and the driving component (48) are housed in a housing (45) located under the lower wall (23) of the body (6) so as to be protected from spray.

6. Body (6) according to any of the preceding claims, in which each conveyor belt (27A, 27B) is closed in a loop between the driving roller (33) and a return roller (30) which is free in rotation, said belt (27A, 27B) forming a strand (36A, 36B) for transporting articles and a return-empty strand (37A, 37B), said transporting strand being stretched between the return roller (30) and the driving roller (33) and said return-empty strand (37A, 37B) resting on intermediate rollers (70) disposed between the return roller (30) and the driving roller (33), the return-empty strand (37A, 37B) forming, under the effect of its own weight, a sag (75A, 75B) of variable depth between two intermediate rollers (70), so as to compensate for distension of the belt (27A, 27B).

7. Body (6) according to any of the preceding claims, which also comprises an inclined plane (80) arranged in a manner inclined downwards and rearwards in relation to the plane of the conveyor belts (27A, 27B) of the first and second conveyors (24A, 24B) and prolonging the conveyor belts (27A, 27B) of the body (6) so as to permit the unloading of the articles.

8. Body (6) according to claim 7, in which the inclined plane (80) is provided with rolling means, such as balls, rollers or ball-bearings which are suitable for facilitating the sliding of the articles on the inclined plane (80).

9. Body (6) according to any of the preceding claims, in which the driven component (51) is arranged coaxially with the driving roller (33), in a manner integral in rotation with said driving roller (33), between the first conveyor (24A) and the second conveyor (24B).

10. Body (6) according to any of the preceding claims, in which the driving component (48) on the output side of the gear motor (M) is connected, in direct engagement via the belt (54), to the driven component (51).

11. Body (6) according to any of the preceding claims, in which the driving device (28) projects into a space (39) between the conveyor belts (27A, 27B) through a slot provided in the lower wall (23) of the body (6).

12. Body (6) according to claim 11, in which the belt (54) is deployed through the slot.

## Patentansprüche

1. Aufbau (6) eines Fahrzeugs zum Fördern von Gegenständen, der einen inneren Förderraum begrenzt und eine Fördervorrichtung (2) aufweist, die ein erstes Förderelement (24A), das in dem Förderraum angeordnet ist, und eine Antriebsvorrichtung (28) umfasst, wobei die Fördervorrichtung (12) ein zweites Förderelement (24B) umfasst, das an das erste Förderelement (24A) angrenzt, wobei das erste und das zweite Förderelement (24A, 24B) jeweils ein Förderband (27A, 27B) und eine Antriebsrolle (33) aufweisen, die mit Hilfe des Antriebselements (28) zur Drehung angetrieben werden kann, wobei die Fördervorrichtung (28) zwischen dem ersten und dem zweiten Förderelement (24A, 24B) an die Antriebsrolle (33) angekoppelt ist,
**dadurch gekennzeichnet, dass** er eine Innenwand (23) und einen Getriebemotor (M) umfasst, wobei die Antriebsvorrichtung (28) ein Antriebsorgan (48) am Ausgang des Getriebemotors (M), ein Abtriebsorgan (51) und einen Riemen (54) umfasst, der das Antriebsorgan (48) mit dem Abtriebsorgan (51) verbindet, wobei das Antriebsorgan (48) und der Getriebemotor (M) unter der Innenwand (23) des Aufbaus (6) angeordnet sind.

2. Aufbau (6) nach Anspruch 1, wobei die Antriebsrolle (33) und die Antriebsvorrichtung (28) dem ersten und dem zweiten Förderelement (24A, 24B) gemeinsam sind.

3. Aufbau (6) nach Anspruch 1, der eine Fördervorrichtung umfasst und wobei die Steuereinrichtung und die Antriebsvorrichtung (28) dafür geeignet sind, die Antriebsrollen (33) jedes Förderelements (24A, 24B) getrennt oder gleichzeitig zu betreiben.

4. Aufbau (6) nach einem der vorhergehenden Ansprüche, der einen Austrittsdurchlass (22) umfasst und wobei das Antriebsorgan (48) und das Abtriebsorgan (51) in der Längsrichtung voneinander beabstandet sind, wobei das Antriebsorgan (48) in einem größeren Abstand von dem Austrittsdurchlass (22) angeordnet ist als das Abtriebsorgan (51).

5. Aufbau (6) nach einem der vorhergehenden Ansprüche, wobei der Getriebemotor (M) und das Antriebsorgan (48) in einem Kasten (45) angeordnet sind, der sich unter der Innenwand (23) des Aufbaus (6) befindet, so dass sie spritzgeschützt sind.

6. Aufbau (6) nach einem der vorhergehenden Ansprüche, wobei jedes Förderband (27A, 27B) als geschlossene Schleife zwischen der Antriebsrolle (33) und einer frei drehbaren Umlenkrolle (30) ausgebildet ist, wobei das Band (27A, 27B) einen Strang zum Fördern der Gegenstände (36A, 36B) und einen Leerrücklaufstrang (37A, 37B) bildet, wobei der Förderstrang zwischen der Umlenkrolle (30) und der Antriebsrolle (33) gespannt ist und wobei der Leerrücklaufstrang (37A, 37B) (sic) sich auf Zwischenrollen (70) abstützt, die zwischen der Umlenkrolle (30) und der Antriebsrolle (33) angeordnet sind, wobei der Leerrücklaufstrang (37A, 37B) unter der Einwirkung seines Eigengewichts eine Seillinie (75A, 75B) mit variabler Tiefe zwischen zwei Zwischenrollen (70) bildet, derart, dass die Ausdehnung des Bandes (27A, 27B) kompensiert wird.

7. Aufbau (6) nach einem der vorhergehenden Ansprüche, die ferner eine geneigte Ebene (80) aufweist, die derart ausgebildet ist, dass sie relativ zu der Ebene der Förderbänder (27A, 27B) des ersten und des zweiten Förderelements (24A, 24B) nach unten und nach hinten geneigt ist und die Förderbänder (27A, 27B) des Aufbaus (6) derart verlängert, dass sie das Entladen der Gegenstände ermöglicht.

8. Aufbau (6) nach Anspruch 7, wobei die geneigte Ebene (80) mit Rollmitteln, wie Kugeln, Rollen oder Kugellager, versehen ist, die dafür geeignet sind, das Gleiten der Gegenstände auf der geneigten Ebene (80) ermöglichen.

9. Aufbau (6) nach einem der vorhergehenden Ansprüche, wobei das Abtriebsorgan (51) koaxial zu der Antriebsrolle (33) angeordnet ist, derart, dass es mit der Antriebsrolle (33) zwischen dem ersten Förderelement (24A) und dem zweiten Förderelement (24B) drehbeweglich ist.

10. Aufbau (6) nach einem der vorhergehenden Ansprüche, wobei das Antriebsorgan (48) am Ausgang des Getriebemotors (M) mit Hilfe des Riemens (54) in direktem Eingriff mit dem Abtriebsorgan (51) verbunden ist.

11. Aufbau (6) nach einem der vorhergehenden Ansprüche, wobei das Antriebsorgan (28) in einen Raum (39) zwischen den Förderbändern (27A, 27B) durch einen Schlitz hindurch vorspringt, der in der Innenwand (23) des Aufbaus (6) vorgesehen ist.

12. Aufbau (6) nach Anspruch 11, wobei der Riemen (54) durch den Schlitz hindurch ausfährt.
